**Europäisches Patentamt**

**European Patent Office**

**Office européen des brevets**

(11) Veröffentlichungsnummer: **0 170 835**
**A1**

# (12) EUROPÄISCHE PATENTANMELDUNG

(21) Anmeldenummer: **85107414.6**

(22) Anmeldetag: **15.06.85**

(51) Int. Cl.⁴: **A 01 B 15/00**

(30) Priorität: **28.06.84 US 625810**

(43) Veröffentlichungstag der Anmeldung: **12.02.86**
**Patentblatt 86/7**

(84) Benannte Vertragsstaaten: **DE FR GB SE**

(71) Anmelder: **DEERE & COMPANY, 1 John Deere Road, Moline Illinois 61265 (US)**

(72) Erfinder: **Shellhouse, Wayle LeRoy, 2624-19 1/2 Street Ct, Rock Island Illinois 61201 (US)**
Erfinder: **Van Auwelaer, James Michael, 311 E. 21st Avenue, Coal Valley Illinois 61240 (US)**

(74) Vertreter: **Sartorius, Peter et al, DEERE & COMPANY European Office, Patent Department Postfach 503 Steubenstrasse 36-42, D-6800 Mannheim 1 (DE)**

(54) **Pflug.**

(57) Ein Pflug weist an seinem Rahmen (12) eine vertikal verlaufende Tragplatte (16) zur Aufnahme eines Meißelschares (20) auf, der mittels Schraubenbolzen (22) befestigt ist. Hinter dem Meißelschar ist an dem Rahmen (12) und der Tragplatte (16) eine Anlage horizontal verstellbar angeordnet, um die von dem Meißelschar ausgehenden Kräfte entsprechend ausgleichen zu können.

## Pflug

Die Erfindung bezieht sich auf einen Pflug mit an einem Rahmen angeordneten Scharkörpern, insbesondere Meißelschare, die über Schraubenbolzen am Rahmen angeschlossen sind, die von außenliegenden Seiten begrenzt werden, um eine sich in Fahrtrichtung erstreckende Furche zu bilden.

Es ist allgemein bekannt, bei Pflügen mit Pflugscharen Anlagen zur Führung des Pfluges vorzusehen, die hierzu fest mit dem Pflugkörper bzw. dem den Pflugkörper tragenden Rahmen verbunden sind. Bei einer Verstellung derartiger Pflugkörper werden die Anlagen mitverstellt, die die Aufgabe haben, den Pflug während des Arbeitseinsatzes an der Furchenwand abzustützen und damit ein seitliches Ausbrechen zu verhindern. Bei Grubbern ist es bekannt, hinter den Scharkörpern vertikal bzw. horizontal verstellbare Schleifsohlen vorzusehen, die gewährleisten, daß mit ihrer breiten Auflagefläche eine Abstützung der von dem Scharkörper ausgehenden senkrechten Kraftkomponente auf der Furchensohle erfolgt. Derartige Schleifsohlen sind jedoch für Pflugkörper nicht verwendbar.

Bei Pflügen mit Meißelscharen fehlt normalerweise eine derartige Anlage. Bei Pflugkörpern mit Scheibenscharen werden diese winklig zur Arbeitsrichtung ausgerichtet, während die Meißelschare in Arbeitsrichtung zeigen. Bei der Verwendung derartiger Meißelschare (US-A-2 689 514) tritt leicht ein Überschneiden bzw. ein Unterschneiden auf. Ein Überschneiden tritt auf, wenn die von dem Meißelschar ausgehende Kraftlinie dazu neigt, den Rahmen des Pfluges in eine Richtung zu drücken, die rechtwinklig zur Arbeitsrichtung verläuft, um somit die Arbeitsbreite des Pflugkörpers zu vergrößern. Ein Unterschneiden tritt normalerweise bei größeren Pflugkörpern auf, wobei die Kräfte, die von dem Pflugkörper ausgehen, dazu beitragen, den Rahmen in Längsrichtung, d. h. in Arbeitsrichtung, zu bewegen, um somit
die Arbeitsbreite des Pflugkörpers zu verringern.

Demgegenüber liegt der Erfindung die Aufgabe zugrunde, das
Problem der Über- bzw. Unterschneidung des Pflugkörpers
auf einfache Weise besser zu steuern. Diese Aufgabe ist
dadurch gelöst worden, daß an dem Rahmen hinter dem Scharkörper eine sich in etwa in Arbeitsrichtung erstreckende
Anlage angeordnet und zumindest in Richtung der Seiten des
Scharkörpers einstellbar ist. Die Anlage, die sich normalerweise in Arbeitsrichtung erstreckt, läßt sich auf einfache Weise seitlich im Bereich der außenliegenden Kanten
des Pflugkörpers am Rahmen des Pfluges montieren. Hierdurch wird auch auf einfache Weise eine Abstützung des
Pflugkörpers, insbesondere des Meißelschares, an der Seitenwand der durch den Pflugkörper gebildeten Furche ermöglicht. Durch die einfache Einstellung der Anlage läßt sich
auf einfache Weise eine relativ schnelle Anpassung der Anlage mit Bezug auf den entsprechenden Pflugkörper vornehmen. Somit kann ein Überschneiden bzw. Unterschneiden des
Pflugkörpers auf einfache Weise verhindert werden.

Eine einfache Montage des Scharkörpers bzw. der Anlage
wird dadurch erreicht, daß an dem Rahmen zur Aufnahme der
Anlage und des Scharkörpers eine in etwa vertikal verlaufende Tragplatte vorgesehen ist, daß am vorderen Ende der
Tragplatte ein Paßstück vorgesehen ist, das mit einer konkav geformten Tragfläche zum lösbaren Anschluß des gebogenen Scharkörpers ausgerüstet ist, und daß der Scharkörper
am vorderen Ende und die Anlage am hinteren Ende der Tragplatte angeschlossen sind. Dabei ist es vorteilhaft, daß
die Tragplatte zwischen dem Rahmen und der Anlage vorgesehen ist und daß der Rahmen zwischen der Tragplatte und
der Landseite des Scharkörpers vorgesehen ist.

Eine einfachere Anpassung der Anlage an die unterschiedlichen Pflugkörper wird auch dadurch erreicht, daß die Anlage horizontal und/oder vertikal verstellbar am Rahmen gelagert ist und daß die Anlage über Schraubenbolzen und mittels Distanzstücken, die auf den Schraubenbolzen zwischen der Tragplatte der Anlage aufschiebbar sind, an die Tragplatte angeschlossen ist. Dabei ist es vorteilhaft, daß zumindest ein Distanzstück als Keilstück ausgebildet ist und die Anlage im angebauten Zustand mit der Tragplatte einen nach hinten offenen Winkel einschließt und daß die Anlage in Richtung der Landseite bzw. in Richtung der parallel verlaufenden, gegenüberliegenden Seiten des Scharkörpers verstellbar ist.

Im folgenden wird die Erfindung anhand von lediglich einen Ausführungsweg darstellenden Zeichnungen näher erläutert. Es zeigt:

Fig. 1    eine perspektivische Darstellung eines Schares einer Egge, das an einen Rahmen der Egge lösbar angeschlossen ist,

Fig. 2    eine ähnliche Ansicht wie in Fig. 1, jedoch in der Ansicht von hinten,

Fig. 3 und 4    das entsprechende Schar gemäß Fig. 1 und 2 mit dem zugehörigen Rahmen in auseinandergezogener Darstellung,

Fig. 5    einen Schnitt entlang der Linie 5 - 5 gemäß Fig. 1,

Fig. 6    einen Schnitt entlang der Linie 6 - 6 gemäß Fig. 2,

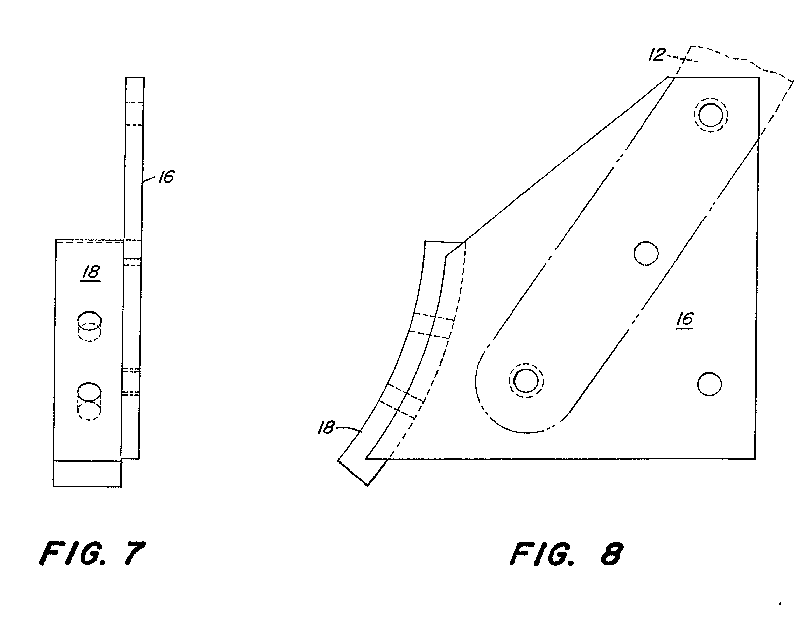

Fig. 7    eine Frontansicht der Tragplatte zur Aufnahme des Eggenschares,

Fig. 8     eine Seitenansicht des Eggenschares gemäß
Fig. 7.

In der Zeichnung ist mit 10 ein Eggenanbauteil bezeichnet, das mittels Schraubenbolzen 14 an einen Rahmen 12 einer in der Zeichnung nicht dargestellten Egge angeschlossen ist. Das Eggenanbauteil 10 weist eine Tragplatte 16, ein mit der Tragplatte 16 fest verbundenes Paßstück 18 sowie einen Scharkörper 20 auf, der mittels Schraubenbolzen 22 an das Paßstück 18 lösbar angeschlossen ist. Der Scharkörper 20 kann verschiedene Formgebungen aufweisen und beispielsweise nach innen gebogen und somit konkav sowie ein wenig gedreht ausgebildet sein. Die Drehung des Scharkörpers erfolgt dabei um seine Längsmittelachse.

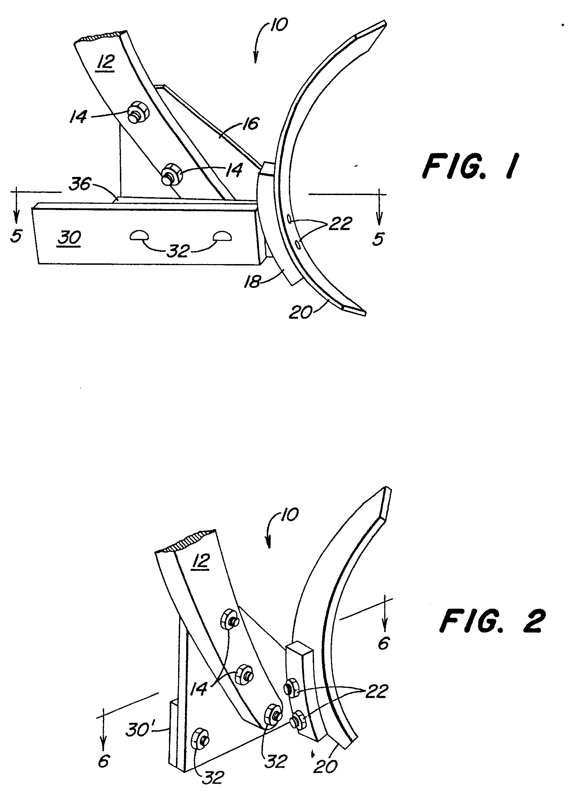

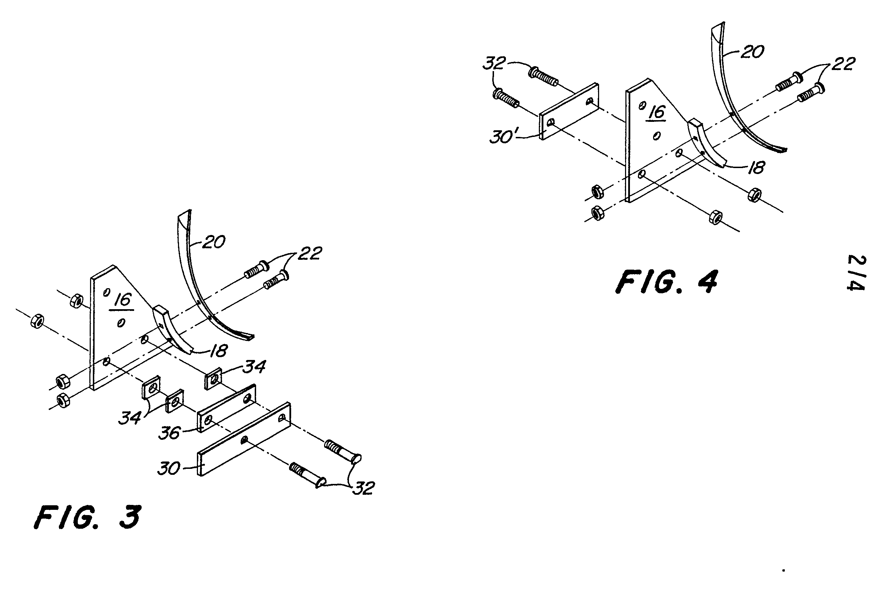

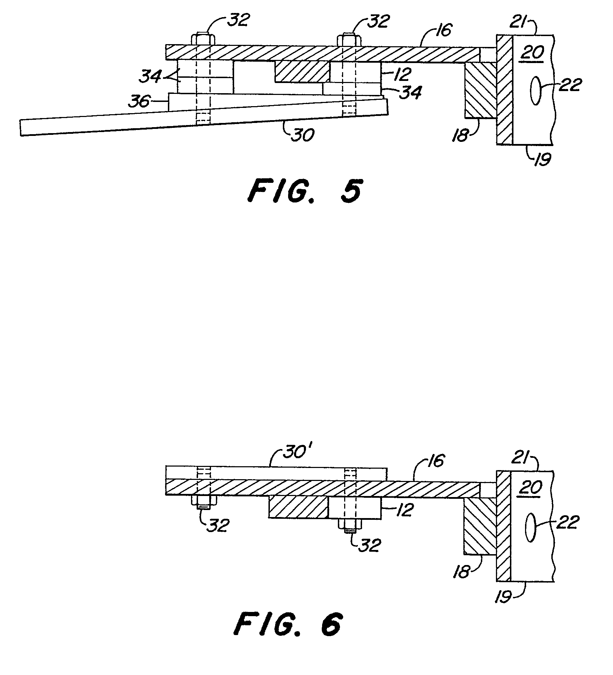

Wie aus den Figuren 1, 3 und 5 hervorgeht, ist eine Anlage 30 an die rechte Seite des Rahmens 12 und an das hintere Ende der Tragplatte 16 mittels Schraubenbolzen 32 lösbar angeschlossen. Distanzstücke 34 und ein Keilstück 36 befinden sich zwischen der Tragplatte 16 und der Anlage 30, um die Anlage 30 in einem entsprechenden Winkel mit Bezug auf die Arbeitsrichtung der Egge anzuordnen und den hinteren Teil der Anlage 30 in Richtung der Landseite 19 des Scharkörpers 20 herausstellen zu können. Die Anlage 30 kann auch parallel zur Arbeitsrichtung der Egge ausgerichtet werden. Ferner ist es möglich, Anlagen 30 unterschiedlicher Länge an der Tragplatte 16 anzuordnen bzw. die einzelnen Höhen der Distanzstücke 34 und der Keilstücke 36 zu verändern, um somit die Lage der Anlage und ihre Stellung mit Bezug auf die Landseite 19 des Scharkörpers 20 verändern zu können.

Wie aus den Figuren 2, 4 und 6 hervorgeht, ist eine Anlage 30' lösbar mittels Schraubenbolzen 32 an die linke Seite des Rahmens 12 und des hinteren Teils der Tragplatte 16 angeschlossen. Die Anlage 30' verläuft hinter dem Scharkörper 20 in Arbeitsrichtung und befindet sich auf der gleichen Seite wie die linke Seite 21 des Scharkörpers 20.
Die Anlage 30' kann ebenfalls unterschiedlich lang und unterschiedlich stark ausgebildet sein. Die Formgebung der
Anlage 30' entspricht in etwa der Formgebung der Anlage 30.

Wenn bei einer bestimmten Arbeitsweise die Kraftlinie des
Scharkörpers 20 so verläuft, daß ein Unterschneiden bzw.
ein Überschneiden auftritt, so wird die Anlage 30 bzw. 30'
so in Richtung der Landseite 19 bzw. der Seite 21 verstellt,
um somit den Verlauf der Kraftlinie des Scharkörpers 20
entsprechend zu verändern.

Tritt beispielsweise eine Überschneidungstendenz auf, so
wird die Anlage 30' links vom Rahmen 12 angeordnet (siehe
Fig. 2, 4 und 6). Bewegt sich der Scharkörper durch den
Boden, so bildet er eine in Arbeitsrichtung verlaufende
Furche, deren Breite durch die rechts liegende Landseite
19 bzw. die links liegende Seite 21 definiert wird. Ein
Teil der Landseite 30' lehnt sich dabei an der Furchenwand
an, die beispielsweise durch die linke Seite 21 gebildet
wird, um den Kräften entgegenzuwirken, die beispielsweise
beim Überschneidungsproblem auftreten.

Tritt beispielsweise das Problem des Unterschneidens auf,
so wird die Anlage 30' von der linken Seite des Rahmens 12
entfernt und die Anlage 30 auf der rechten Seite mittels
entsprechender Distanzstücke 34 und Keilstücke 36 montiert.
Wie aus den Figuren 1, 3 und 5 hervorgeht, legt sich dabei
der hintere Teil der Anlage 30 gegen die Furchenwand an,
die durch die Landseite 19 des Scharkörpers 20 gebildet
wird, um somit den Arbeitskräften entgegenzuwirken, die
durch Unterschneiden auftreten.

## Patentansprüche

1. Pflug mit an einem Rahmen (12) angeordneten Scharkörpern, insbesondere Meißelschare (20), die über Schraubenbolzen (22) am Rahmen (12) angeschlossen sind, die von außenliegenden Seiten (19, 21) begrenzt werden, um eine sich in Fahrtrichtung erstreckende Furche zu bilden, dadurch gekennzeichnet, daß an dem Rahmen (12) hinter dem Scharkörper (20) eine sich in etwa in Arbeitsrichtung erstreckende Anlage (30, 30') angeordnet und zumindest in Richtung der Seiten (19, 21) des Scharkörpers einstellbar ist.

2. Pflug nach Anspruch 1, dadurch gekennzeichnet, daß an dem Rahmen (12) zur Aufnahme der Anlage (30, 30') und des Scharkörpers (20) eine in etwa vertikal verlaufende Tragplatte (16) vorgesehen ist.

3. Pflug nach Anspruch 1 oder 2, dadurch gekennzeichnet, daß am vorderen Ende der Tragplatte (16) ein Paßstück (18) vorgesehen ist, das mit einer konkav geformten Tragfläche zum lösbaren Anschluß des gebogenen Scharkörpers (20) ausgerüstet ist.

4. Pflug nach einem oder mehreren der vorherigen Ansprüche, dadurch gekennzeichnet, daß der Scharkörper (20) am vorderen Ende und die Anlage (30, 30') am hinteren Ende der Tragplatte (16) angeschlossen sind.

5. Pflug nach einem oder mehreren der vorherigen Ansprüche, dadurch gekennzeichnet, daß die Tragplatte (16) zwischen dem Rahmen (12) und der Anlage (30, 30') vorgesehen ist.

6. Pflug nach einem oder mehreren der vorherigen Ansprüche, dadurch gekennzeichnet, daß der Rahmen (12) zwischen der Tragplatte (16) und der Landseite (19) des Scharkörpers (20) vorgesehen ist.

7. Pflug nach einem oder mehreren der vorherigen Ansprüche, dadurch gekennzeichnet, daß die Anlage (30, 30') horizontal und/oder vertikal verstellbar am Rahmen (12) gelagert ist.

8. Pflug nach einem oder mehreren der vorherigen Ansprüche, dadurch gekennzeichnet, daß die Anlage (30) über Schraubenbolzen (32) und mittels Distanzstücken (34), die auf den Schraubenbolzen (32) zwischen der Tragplatte (16) der Anlage aufschiebbar sind, an die Tragplatte (16) angeschlossen ist.

9. Pflug nach einem oder mehreren der vorherigen Ansprüche, dadurch gekennzeichnet, daß zumindest ein Distanzstück als Keilstück (36) ausgebildet ist und die Anlage (30, 30') im angebauten Zustand mit der Tragplatte (16) einen nach hinten offenen Winkel einschließt.

10. Pflug nach einem oder mehreren der vorherigen Ansprüche, dadurch gekennzeichnet, daß die Anlage in Richtung der Landseite (19) bzw. in Richtung der parallel verlaufenden, gegenüberliegenden Seiten (21) des Scharkörpers (20) verstellbar ist.

*FIG. 1*

*FIG. 2*

*FIG. 4*

*FIG. 3*

FIG. 5

FIG. 6

4/4

FIG. 8

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US-A-2 350 049 (LEE)<br><br>* Abbildungen 1,2; Seite 1, linke Spalte, Zeilen 1-42, Seite 2, linke Spalte, Zeilen 1-36, Anspruch 1 * | 1,5,7, 10 | A 01 B 15/00 |
| Y | | 2-4 | |
| Y | US-A-2 002 059 (GURLEY)<br>* Figuren 1,2 * | 2-4 | |
| Y | FR-A- 948 308 (ARNOUX)<br>* Abbildungen 1,4 * | 2-4 | |
| Y | FR-A-1 388 883 (INTERNATIONAL HARVESTER FRANCE)<br>* Abbildungen 1,2 * | 3 | RECHERCHIERTE SACHGEBIETE (Int. Cl.4) |
| A | US-A-1 232 139 (WESTBROOKS)<br>* Vollständiges Dokument * | 3 | A 01 B 15/00<br>A 01 B 15/02<br>A 01 B 15/04<br>A 01 B 15/06<br>A 01 B 15/20<br>A 01 B 17/00 |
| A | DE-C- 819 595 (GLINZ)<br>* Abbildungen 1,3 * | 9 | |
| A | DE-U-1 795 016 (RABEWERK)<br><br>* Vollständiges Dokument *<br><br>---     -/- | | |

Der vorliegende Recherchenbericht wurde für alle Patentansprüche erstellt.

| Recherchenort | Abschlußdatum der Recherche | Prüfer |
|---|---|---|
| BERLIN | 16-09-1985 | SAMWEL P.N. |

Europäisches
Patentamt

**EUROPÄISCHER RECHERCHENBERICHT**

0170835

Nummer der Anmeldung

EP 85 10 7414

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | SOVIET INVENTIONS ILLUSTRATED, Sektion Agriculture, Woche K 34, 5. Oktober 1983, Abstrakt Nr. 83-745714, Derwent Publications Ltd., London, GB; & SU - A - 967 290 (BASHKIR AGRIC. RES.) 28.10.1982 | | |
| | --- | | |
| A | AT-B- 29 175 (BIPPART) | | |
| | ----- | | |

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 16-09-1985 | SAMWEL P.N. |